# EUROPÄISCHE PATENTANMELDUNG

(11) **EP 3 352 342 A1**
(43) Veröffentlichungstag der Anmeldung: **25.07.2018**
(21) Anmeldenummer: 18151919.0
(22) Anmeldetag: 16.01.2018
(51) Int. Cl.: H02K 5/10, H02K 5/08, H02K 15/12, H02K 1/04

(54) **STATORPAKET MIT STATORENTGASUNG**

(30) Priorität: 24.01.2017 DE 102017101322
(71) Anmelder: ebm-papst Mulfingen GmbH & Co. KG, 74673 Mulfingen (DE)
(72) Erfinder: Zink, Dietmar, 97993 Creglingen (DE); Rybak, Alexander, 97980 Bad Mergentheim (DE); Bickel, Rolf, 97999 Igersheim (DE)
(74) Vertreter: Peter, Julian

(57) **Zusammenfassung**

Die Erfindung betrifft ein Statorpaket eines elektrischen Antriebs, mit einem Wellendurchführungsabschnitt (2), an dem radial außenseitig in Umfangsrichtung angeordnete und jeweils mit einer Wicklung versehene Wickelzähne (3) vorgesehen sind, wobei das Statorpaket (1) durch eine elektrisch isolierende Umhüllungsmasse umhüllt ist, und an dem Wellendurchführungsabschnitt (2) radial innenseitig und/oder axial stirnseitig zumindest eine Entgasungsöffnung ausgebildet, die zwischen dem Wellendurchführungsabschnitt (2) und der Umhüllungsmasse angeordnet ist.

## Beschreibung

Die Erfindung betrifft ein Statorpaket eines elektrischen Antriebs mit einer vordefinierten Entgasungsmöglichkeit des Umhüllungsmaterials.

Statorpakete sind aus dem Stand der Technik zum Einsatz bei Elektromotoren oder Generatoren bekannt. Zum Isolieren des Statorpakets wird dieser durch eine Umhüllungsmasse umspritzt oder umpresst. Ein entsprechendes Verfahren ist beispielsweise aus der DE 197 46 605 A1 bekannt.

Problematisch bei der isolierenden Umhüllung ist die im Zuge des Umpressens oder Umspritzens sowie im Betrieb auftretende Ausgasung von Medien, beispielsweise Ölen, Beschichtungsmaterialen oder andere Fertigungsrückständen.

Um eine unerwünschte Deformation der Umhüllungsmasse infolge der Ausgasung zu Vermeiden werden thermische Vorbehandlungen des Statorpakets vorgesehen. Der Prozess ist jedoch im Ergebnis willkürlich, nicht plan- oder reproduzierbar und somit für die Massenfertigung schlecht geeignet. Blasen und Lunker in der Umhüllungsmasse sind zudem unerwünscht.

Der Erfindung liegt deshalb die Aufgabe zugrunde, eine blasen- und lunkerfreie elektrisch isolierende Umhüllungsmasse beim Umhüllen von gewickelten Statorpaketen bereitzustellen.

Diese Aufgabe wird durch die Merkmalskombination gemäß Patentanspruch 1 gelöst.

Erfindungsgemäß wird ein Statorpaket eines elektrischen Antriebs mit einem Wellendurchführungsabschnitt vorgeschlagen, an dem radial außenseitig in Umfangsrichtung angeordnete und jeweils mit einer Wicklung versehene Wickelzähne vorgesehen sind. Das Statorpaket ist durch eine elektrisch isolierende Umhüllungsmasse umhüllt. An dem Wellendurchführungsabschnitt ist radial innenseitig und/oder axial stirnseitig zumindest eine Entgasungsöffnung ausgebildet, die zwischen dem Wellendurchführungsabschnitt und der Umhüllungsmasse angeordnet ist, so dass eine bei der Umhüllungsmasse auftretende Entgasung in die zumindest eine Entgasungsöffnung erfolgen kann.

Zudem ist an dem erfindungsgemäßen Statorpaket vorteilhaft, dass die thermische Vorbehandlung entfallen kann und das Statorpaket somit schneller und kostengünstiger fertigbar ist.

Auch ist günstig, dass die Entgasungsfunktion nicht nur während des Aufbringens der Umhüllungsmasse, sondern dauerhaft auch im Betrieb des Statorpakets, bei dem thermische Einflüsse zu einer weiteren Entgasung führen können, vorgesehen ist.

Die an einer vorbestimmten Stelle bzw. Stellen vorgesehene(n) Entgasungsöffnung(en) gewährleisten zudem eine hohe Reproduzierbarkeit bei der Entgasung und eignen sich zum Einsatz in der Massenfertigung.

In einer vorteilhaften Ausgestaltung der Erfindung ist vorgesehen, dass die zumindest eine Entgasungsöffnung unmittelbar zwischen dem Wellendurchführungsabschnitt und der Umhüllungsmasse angeordnet ist. Der Wellendurchführungsabschnitt ist bei dem Statorpaket der im Wesentlichen zylindrische Zentralkörper, durch den sich die Welle erstreckt und an dem radial außenseitig die Wickelzähne angeordnet sind.

In einer Ausbildung des Statorpakets ist vorgesehen, dass die zumindest eine Entgasungsöffnung als Axialbohrung ausgebildet ist, welche das Statorpaket zumindest abschnittsweise durchdringt. Die Axialbohrung verläuft durch das Statorpaket, insbesondere durch den Wellendurchführungsabschnitt und dringt an zumindest einer axialen Stirnseite, vorzugsweise an beiden axialen Stirnseiten durch die Umhüllungsmasse, so dass die Entgasung der Umhüllungsmasse aus der Axialbohrung erfolgen kann.

In einer Ausführungsvariante, die alternativ oder zusätzlich vorgesehen sein kann, ist die zumindest eine Entgasungsöffnung als Entgasungsausklinkung in zumindest einem axial stirnseitigen Abschnitt des Wellendurchführungsabschnitts ausgebildet. In einer günstigen Ausbildung erfolgt die Anordnung der Entgasungsausklinkung an beiden axial stirnseitigen Abschnitten des Wellendurchführungsabschnitts, so dass die Entgasung zweiseitig erfolgen kann.

Die Größe einer Entgasungsausklinkung wird definiert durch eine axiale Länge von 1-10% der axialen Länge des Wellendurchführungsabschnitts und über einen Umfang von 1-5% des Wellendurchführungsabschnitts.

Bei dem Statorpaket ist in einem weiteren Ausführungsbeispiel alternativ oder zusätzlich zu den vorstehend beschriebenen Lösungen der Entgasungsöffnung vorgesehen, dass die zumindest eine Entgasungsöffnung durch eine bereichsweise Segmentierung einer radialen Innenwand des Wellendurchführungsabschnitts gebildet ist, wobei die Segmentierung durch zumindest eine lokale Aussparung der radialen Innenwand gebildet ist. In einer günstigen Ausführung wird die Segmentierung als zumindest eine axiale Längsnut oder zumindest eine umlaufende Umfangsnut ausgebildet, wobei auch eine Mehrzahl an voneinander beabstandeten Längsnuten oder Umfangsnuten vorgesehen sein kann.

In einer Ausführungsvariante des Statorpakets ist die zumindest eine axiale Längsnut und/oder die zumindest eine Umfangsnut auf der Innenwand angeordnet, wobei die zumindest eine Längsnut und/oder Umfangsnut in nichtabgedichteter mittelbarer Verbindung mit der Umhüllungsmasse steht, so dass eine Entgasung in die zumindest eine Längsnut erfolgen kann.

Vorteilhaft ist eine Ausbildung, bei sich die zumindest eine axiale Längsnut über 10-80% der axialen Gesamtlänge des Wellendurchführungsabschnitts erstreckt. Die zumindest eine Umfangsnut ist vornehmlich umlaufend ausgebildet.

Als Umhüllungsmasse eignen sich beispielsweise thermoplastische und/oder duroplastische technische Industriekunststoffe. Die Aufbringung erfolgt gemäß den aus dem Stand der Technik bekannten Verfahren.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine axiale Draufsicht auf ein Statorpaket;
- Fig. 2: eine seitliche Schnittansicht auf eine erste Ausführungsvariante,
- Fig. 3: eine seitliche Schnittansicht auf eine zweite Ausführungsvariante,
- Fig. 4: eine seitliche Schnittansicht auf eine weitere Ausführungsvariante.

Gleiche Bezugszeichen benennen gleiche Teile in allen Ansichten.

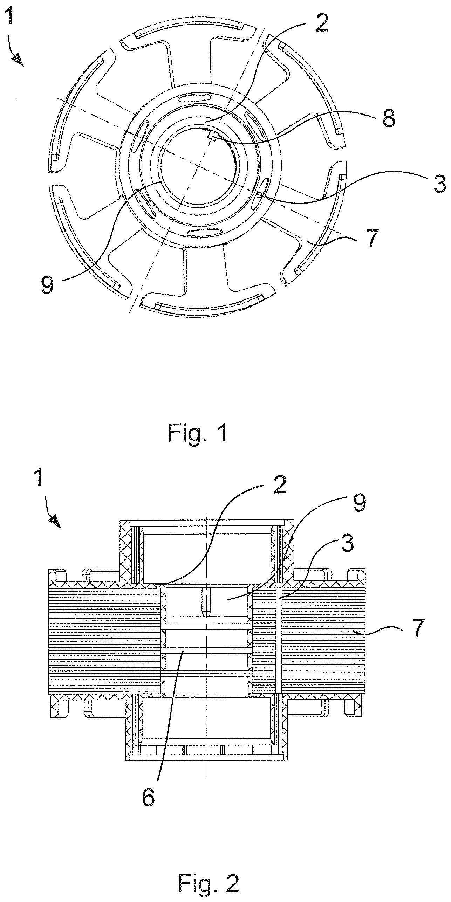

In Figur 1 ist ein Statorpaket 1 in einer axialen Draufsicht dargestellt, das einen zylindrischen Wellendurchführungsabschnitt 2 aufweist, an dem radial außenseitig in Umfangsrichtung beabstandet angeordnete Wickelzähne 7 mit Blechpaketen vorgesehen sind. Die Wicklungen sind aus Gründen der Übersichtlichkeit nicht eingezeichnet. Das Statorpaket 1 wird mit einer nicht gekennzeichneten elektrisch isolierenden Umhüllungsmasse umhüllt. Auch wurden üblicherweise integrierte Bauteile, wie die von der Drehfixierung 8 verbundene Antriebswelle weggelassen, obgleich diese Teile des Statorpakets 1 sein kann.

Die Figuren 2 bis 4 zeigen Ausführungsbeispiele des Statorpakets 1 aus Figur 1. Gemäß der Variante in Figur 2 sind an dem Wellendurchführungsabschnitt 2 radial innenseitig Entgasungsöffnungen vorgesehen, die durch eine bereichsweise Segmentierung gewährleistet werden. Die Segmentierung erfolgt durch drei umlaufende und axial voneinander beabstandete Umfangsnuten 6 entlang der radialen Innenwand 9 des Wellendurchführungsabschnitts 2.

Zudem umfasst das Statorpaket 1 als weitere Entgasungsöffnung eine Axialbohrung 3, welche den Wellendurchführungsabschnitt 2 des Statorpakets 1 vollständig und radial nach außen zu der Innenwand 9 beabstandet durchdringt. Die Axialbohrung 3 bietet zwei axial stirnseitige Entgasungsöffnungen, an welche die Umhüllungsmasse beidseitig unmittelbar angrenzt, so dass eine bei der Umhüllungsmasse auftretende Entgasung auch durch die Axialbohrung 3 erfolgen kann. Die Axialbohrung 3 und die Umfangsnuten 6 verlaufen senkrecht zueinander.

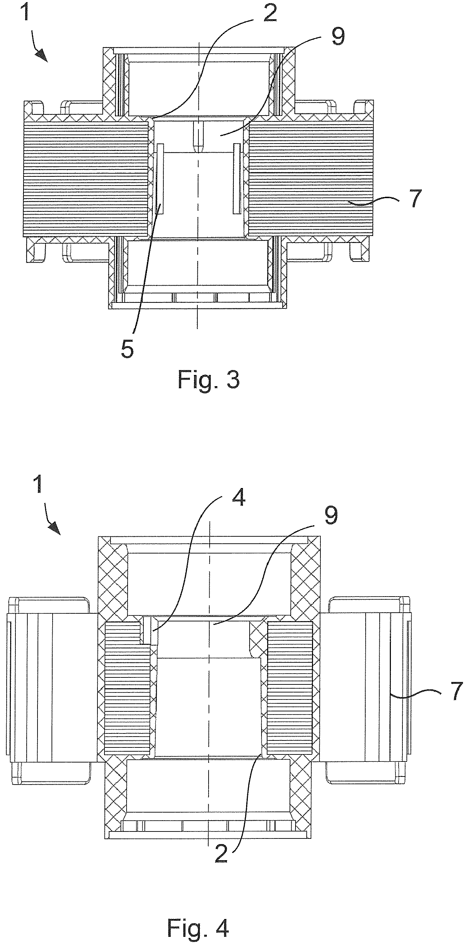

Figur 3 zeigt ein weiteres alternatives Ausführungsbeispiel, bei dem die Entgasungsöffnungen durch eine bereichsweise Segmentierung mit lokaler Aussparung an der radialen Innenwand 9 des Wellendurchführungsabschnitts 2 gebildet ist. Die Segmentierung wird durch zwei axiale Längsnuten 5 ausgebildet, die in Umfangsrichtung zueinander beabstandet sind und nicht bis zu der jeweiligen axialen Stirnseite des Wellendurchführungsabschnitts 2 verlaufen, sondern hierzu axial beabstandet enden. Die axialen Längsnuten 5 erstrecken sich über 60% der axialen Gesamtlänge des Wellendurchführungsabschnitts 2 und stehen in nicht-abgedichtetem mittelbaren Kontakt zur Umhüllungsmasse, so dass eine Entgasung aus den Längsnuten 5 erfolgen kann.

In Figur 4 ist ein weiteres Ausführungsbeispiel dargestellt, wobei die Entgasungsöffnung als Entgasungsausklinkung 4 auf einem axialen stirnseitigen Abschnitt des Wellendurchführungsabschnitts 2 ausgebildet ist. Die Entgasungsausklinkung 4 erstreckt sich über eine axiale Länge von 10% der axialen Länge und über einen Umfang von 3% des Wellendurchführungsabschnitts 2. Auch wenn die Entgasungsausklinkung 4 nur axial einseitig dargestellt ist, kann diese auch beidseitig vorgesehen werden.

Grundsätzlich können alle offenbarten Lösungen der Entgasungsöffnungen beliebig kombiniert werden.

## Patentansprüche

1. Statorpaket eines elektrischen Antriebs, mit einem Wellendurchführungsabschnitt (2), an dem radial außenseitig in Umfangsrichtung angeordnete und jeweils mit einer Wicklung versehene Wickelzähne (7) vorgesehen sind, wobei das Statorpaket (1) durch eine elektrisch isolierende Umhüllungsmasse umhüllt ist, und an dem Wellendurchführungsabschnitt (2) radial innenseitig und/oder axial stirnseitig zumindest eine Entgasungsöffnung ausgebildet, die zwischen dem Wellendurchführungsabschnitt (2) und der Umhüllungsmasse angeordnet ist, so dass eine bei der Umhüllungsmasse auftretende Entgasung in die zumindest eine Entgasungsöffnung erfolgen kann.

2. Statorpaket nach Anspruch 1, **dadurch gekennzeichnet, dass** die zumindest eine Entgasungsöffnung unmittelbar zwischen dem Wellendurchführungsabschnitt (2) und der Umhüllungsmasse angeordnet ist.

3. Statorpaket nach Anspruch 1 oder 2, **dadurch gekennzeichnet, dass** die zumindest eine Entgasungsöffnung als Axialbohrung (3) ausgebildet ist, welche das Statorpaket (1) zumindest abschnittsweise durchdringt.

4. Statorpaket nach dem vorigen Anspruch, **dadurch gekennzeichnet, dass** sich die Axialbohrung (3) durch den Wellendurchführungsabschnitt (2) des Statorpakets (3) erstreckt und in zwei axial gegenüberliegenden Seiten an die Umhüllungsmasse angrenzt.

5. Statorpaket nach einem der Ansprüche 1 bis 3, **dadurch gekennzeichnet, dass** die zumindest eine Entgasungsöffnung als Entgasungsausklinkung (4) in zumindest einem axial stirnseitigen Abschnitt des Wellendurchführungsabschnitt (2) ausgebildet ist.

6. Statorpaket nach dem vorigen Anspruch, **dadurch gekennzeichnet, dass** sich die Entgasungsausklinkung (4) über eine axiale Länge von 1-10% der axialen Länge und über einen Umfang von 1-5% des Wellendurchführungsabschnitts (2) erstreckt.

7. Statorpaket nach Anspruch 1 bis 3 oder 5, **dadurch gekennzeichnet, dass** die zumindest eine Entgasungsöffnung durch eine bereichsweise Segmentierung einer radialen Innenwand des Wellendurchführungsabschnitts (2) gebildet ist, wobei die Segmentierung durch zumindest eine lokale Aussparung gegenüber der angrenzenden radialen Innenwand (9) gebildet ist.

8. Statorpaket nach dem vorigen Anspruch, **dadurch gekennzeichnet, dass** die Segmentierung durch als zumindest eine axiale Längsnut (5) oder umlaufende Umfangsnut (6) ausgebildet ist.

9. Statorpaket nach dem vorigen Anspruch, **dadurch gekennzeichnet, dass** die zumindest eine axiale Längsnut (5) oder zumindest eine Umfangsnut (6) auf der Innenwand angeordnet ist, wobei die zumindest eine Längsnut (5) oder die zumindest eine Umfangsnut (6) in nichtabgedichteter mittelbarer Verbindung mit der Umhüllungsmasse steht, dass eine Entgasung in die zumindest eine Längsnut (5) oder Umfangsnut (6) erfolgen kann.

10. Statorpaket nach einem der vorigen beiden Ansprüche, **dadurch gekennzeichnet, dass** sich die zumindest eine axiale Längsnut (5) über 10-80% der axialen Gesamtlänge des Wellendurchführungsabschnitts (2) erstreckt.
